# EUROPÄISCHE PATENTSCHRIFT

(11) **EP 1 399 713 B1**
(45) Veröffentlichungstag und Bekanntmachung des Hinweises auf die Patenterteilung: **13.02.2008**
(21) Anmeldenummer: 02758254.3
(22) Anmeldetag: 20.06.2002
(51) Int. Cl.: G01D 1/00

(54) **MESSGRÖSSENAUFNEHMER MIT ANGESCHLOSSSENEM DATENSPEICHER**
TRANSDUCER COMPRISING CONNECTED DATA MEMORY
TRANSDUCTEUR AVEC MEMOIRE DE DONNEES RACCORDEE

(30) Priorität: 22.06.2001 DE 10130215
(43) Veröffentlichungstag der Anmeldung: 24.03.2004
(73) Patentinhaber: Hottinger Baldwin Messtechnik GmbH, 64293 Darmstadt (DE)
(72) Erfinder: SCHNEIDER, Jochen, 64372 Ober-Ramstadt (DE)
(74) Vertreter: Behrens, Helmut
(86) Internationale Anmeldenummer: PCT/EP2002/006836
(87) Internationale Veröffentlichungsnummer: WO 2003/001155

(56) Entgegenhaltungen:
- EP-A- 0 324 067
- EP-A- 0 845 660
- EP-A- 0 926 470
- EP-B- 0 541 573
- DE-U- 20 018 871

## Beschreibung

Die Erfindung betrifft einen Meßgrößenaufnehmer mit angeschlossenem Datenspeicher gemäß dem Oberbegriff des Patentanspruchs 1 sowie ein Verfahren zur Erfassung von Meßwerten und zum Austausch von Daten mittels eines Meßgrößenaufnehmers gemäß dem Oberbegriff des Patentanspruchs 11.

Bei Meßvorrichtungen mit komfortablen Anzeigemöglichkeiten oder Meßdatenverarbeitungssystemen ist es häufig erforderlich, den Meßwertaufnehmer mit dem eigentlichen physikalisch-elektrischen Wandler von einer Auswerteschaltung zur Meßsignalverarbeitung räumlich abzusetzen. Dabei sind die Meßwertaufnehmer und die Auswerteschaltung dann in der Regel über elektrische Leitungen miteinander verbunden, die teilweise Entfernungen von einigen hundert Metern überbrücken müssen. Häufig sind es aber auch nur die Umgebungseinflüsse, die eine räumliche Trennung der Meßwertaufnehmer von den Auswertevorrichtungen verlangen. Insbesondere bei derartigen räumlichen Entfernungen ist es daher erforderlich, daß die Auswertevorrichtungen an die richtigen Kenn- oder Kalibrierwerte der physikalisch-elektrischen Wandler angepaßt werden, um eine normierte Meßwertanzeige oder Weiterverarbeitung zu ermöglichen.

Dazu werden nach wie vor zahlreiche Meßgrößenaufnehmer mit einer analogen elektrischen Schnittstelle realisiert. Dies gilt insbesondere für Aufnehmerverfahren, bei denen die Meßgröße am Aufnehmer ohne aktive elektronische Schaltungen in ein elektrisches Signal umgewandelt wird und die Signalaufbereitung in einer separaten Schaltung oder in der Auswertevorrichtung erfolgt. In diesem Fall werden die Kenngrößen des physikalisch-elektrischen Wandlers bzw. Aufnehmers im allgemeinen in einem separaten Datenblatt oder Kalibrierprotokoll festgehalten. Für die Interpretation des Ausgangssignals eines solchen Meßgrößenaufnehmers und die Zuordnung der physikalischen Meßgröße zu diesem Ausgangssignal wird diese Information in jedem Fall in der separaten Schaltung oder der Auswertevorrichtung benötigt. Hierzu müssen diese Kennwerte in die separate Schaltung oder die Auswertevorrichtung meist manuell eingegeben werden, was in der Praxis zu fehlerhaften Eingaben oder Verwechslungen der zugehörigen Datenblätter führen kann. Es sind deshalb eine ganze Reihe von Aufnehmern mit angeschlossenen elektronischen Schaltungen bekannt, in die die Datenblattinformation bzw. die Kalibrierkennwerte des Aufnehmers fest eingespeichert sind und von der angeschlossenen Auswertevorrichtung ausgelesen werden können.

Aus der DE 41 14 921 C2 ist ein elektrischer Stecker mit einem elektronischen Datenträger bekannt, der mit einem Temperaturfühler als physikalisch-elektrischen Wandler über vier elektrische Leitungen verbunden ist. Im elektrischen Stecker sind acht Steckerstifte vorgesehen, durch die die Meßwerte und die im elektronischen Datenträger gespeicherten Kennwerte zu einer Auswertevorrichtung übertragen werden. Dabei wird der Speicher über vier separate nicht für das Meßsignal benötigte Steckerstifte an die Auswertevorrichtung angeschlossen. Bei einer größeren räumlichen Entfernung zwischen dem Thermoelement mit seinem elektrischen Stecker und der Auswertevorrichtung müßten also separate Leitungen zur Übertragung der Kennwerte in die Auswertevorrichtung vorgesehen werden, was insbesondere beim Anschluß einer größeren Anzahl von Aufnehmern an eine Auswertevorrichtung einen höheren Aufwand an Leitungen bedeutet, der oftmals in vorhandenen Versuchsaufbauten nur schwerlich integrierbar ist.

Aus der EP 0 233 176 B1 ist ein Aufnehmer zur Messung physikalischer Größen bekannt, dessen physikalisch-elektrischer Wandler mit einem programmierbaren nicht flüchtigen elektronischen Speicher für Korrekturdaten zu einer Baueinheit zusammengefaßt ist. Dabei werden die elektrischen Aufnehmersignale und die Speicherdaten auf einem gemeinsamen Ausgang in zeitlicher Folge an eine Auswerteschaltung abgegeben. Die in der Aufnehmerbaueinheit enthaltene elektronische Schaltung ist dabei so ausgebildet, daß die Meßdaten vor der Übertragung analogdigital gewandelt werden. Dabei wird nicht näher beschrieben, wie eine Übertragung eines rein analogen Meßsignals sowie der Speicherdaten auf einen gemeinsamen Ausgang realisiert werden kann.

Ein weiterer Meßwertaufnehmer ist aus der EP 0 324 067 A2 bekannt, der aus Meßwandlern in Brückenschaltung und einem integrierten Kennungsgeber besteht. Der Kennungsgeber besitzt eine elektronische Speicherschaltung, in der Aufnehmerkenn- oder Korrekturwerte seriell ausles- und programmierbar gespeichert sind. Diese Aufnehmerkennwerte bzw. Korrekturwerte sind über zwei Meß- oder Speiseleitungen von einer Auswertevorrichtung ausles- oder neu programmierbar. Hierzu wird der Auslesevorgang über eine spezielle dritte Leitung zwischen dem Aufnehmer und der Auswerteschaltung gesteuert, die zur Initiierung des Ausleseprozesses für die Korrekturdaten oder die Meßwertübertragung dient. Bei Verwendung derartiger Aufnehmer ist zur Kennwertübertragung aber in jedem Fall eine Verbindungsleitung mehr erforderlich als bei herkömmlichen Aufnehmern mit analogen Schnittstellen, so daß bei vorhandenen Meßschaltungen ein Austausch herkömmlicher Aufnehmer gegen Aufnehmer mit Kennwertauslesung nicht möglich ist.

Aus der EP 0 541 573 B1 ist ein Meßaufnehmer bekannt, der im Grunde eine Weiterentwicklung des Aufnehmers nach der EP 0 324 067 A2 darstellt. Bei diesem Meßwertaufnehmer wird für die Steuerung der Kennwertübertragung zwischen der Speicherschaltung und der Auswertevorrichtung eine sogenannte Shunt-Steuerleitung verwendet. Eine solche Leitung ist in bestimmten Aufnehmertypen wie beispielsweise Beschleunigungsaufnehmern üblicherweise vorhanden. Dieser Meßwertaufnehmer beschreibt damit eine Möglichkeit, einen solchen Kennungsgeber bzw. dessen Speicherschaltung ohne zusätzliche Leitungen an eine Auswertevorrichtung anzuschließen. Bei Meßwertaufnehmern, die eine solche Shunt-Steuerleitung nicht besitzen, ist dieses Verfahren allerdings nicht anwendbar oder benötigt eine zusätzliche Steuerleitung.

Der Erfindung liegt deshalb die Aufgabe zugrunde, einen Meßgrößenaufnehmer mit einem Datenspeicher zum Anschluß an eine Auswertevorrichtung zu schaffen, der keine zusätzlichen Steuerleitungen zwischen dem Aufnehmer und der Auswertevorrichtung benötigt und gegen einen Aufnehmer ohne Datenspeicher austauschbar ist.

Diese Aufgabe wird durch die in Patentanspruch 1 und 11 angegebene Erfindung gelöst. Weiterbildungen und vorteilhafte Ausführungsbeispiele der Erfindung sind in den Unteransprüchen angegeben.

Die Erfindung hat den Vorteil, daß durch die Umschaltmöglichkeit vom einem Meßbetrieb in einen Kommunikationsmodus und die Datenübertragung auf herkömmlichen Meß- und/oder Speiseleitungen der erfinderische Meßgrößenaufnehmer auch mit einer Auswertevorrichtung ohne Datenaustauschmöglichkeit betrieben werden kann.

Durch die Benutzung vorhandener Meß- und/oder Speiseleitungen zur Umschaltung in den Kommunikationsmodus zur Datenübertragung können bei vorhandenen Meßschaltungen die herkömmlichen Aufnehmer auf einfache Weise durch Aufnehmer mit Datenspeichern ausgetauscht werden, ohne daß vorhandene Verdrahtungen oder übliche Steckverbindungen umgerüstet oder ausgetauscht werden müßten.

Die Erfindung ist in vorteilhafter Weise auch für eine Vielzahl unterschiedlicher Aufnehmerarten einsetzbar, da diese meist aus physikalisch elektrischen Wandlern mit veränderlichen Widerständen bestehen, die in der Regel als Wheatstonesche Brücke geschaltet und in Drei-, Vier-, Fünf- oder Sechsleitertechnik an eine zugehörige Auswertevorrichtung angeschaltet sind, die dann alle über praktisch stromlose Fühlerleitungen verfügen oder bei denen Speise- oder Meßleitungen stromlos schaltbar sind.

Weiterhin besitzt die Erfindung den Vorteil, daß mit Hilfe einer einfachen Strombegrenzungsschaltung ein vorhandenes Leitungspaar mit gleichem elektrischen Potential zur Datenübertragung genutzt werden kann und dies sowohl bei Aufnehmerspeiseschaltungen mit Gleichstrom oder Trägerfrequenzwechselstrom bzw. -spannung.

Die Erfindung wird anhand eines Ausführungsbeispiels, das in der Zeichnung dargestellt ist, näher erläutert. Es zeigen:
- Fig. 1:: ein vereinfachtes Blockschaltbild eines Meßgrößenaufnehmers mit einem angeschlossenen Datenspeichermodul;
- Fig. 2:: ein vereinfachtes Schaltbild des Meßgrößenaufnehmers mit integriertem Datenspeichermodul, und
- Fig. 3:: eine Fold-Back-Kennlinie zur Strombegrenzung im Kommunikationsmodus.

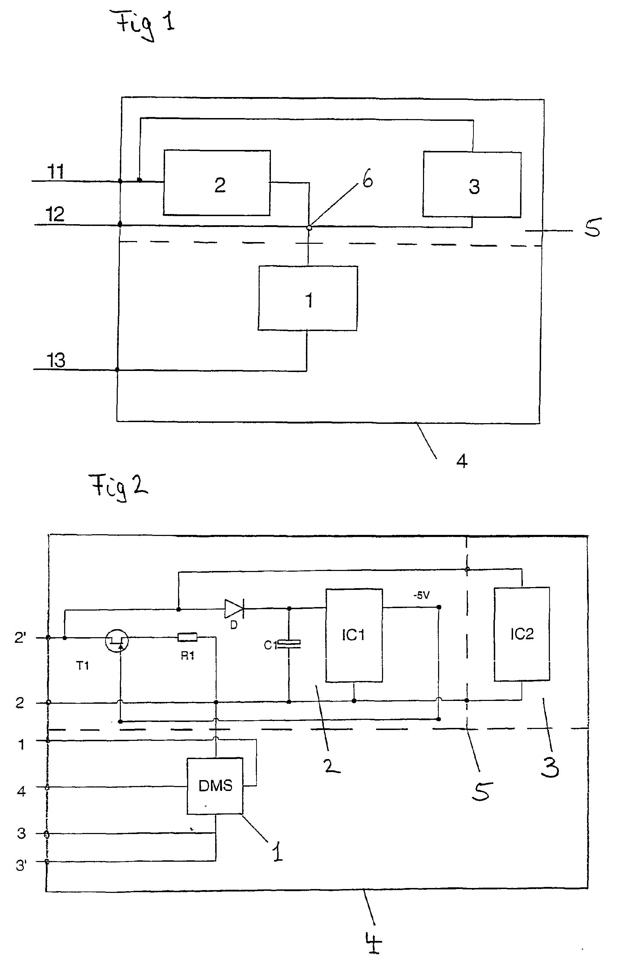

In Fig. 1 der Zeichnung ist ein vereinfachtes Blockschaltbild eines Meßgrößenaufnehmers 4 dargestellt, der aus einem Aufnehmerelement 1 und einem Datenspeichermodul 5 aus einer Fold-Back-Schaltung 2 und einer Speicherschaltung 3 besteht und der über drei elektrische Leitungen 11, 12, 13 mit einer nicht dargestellten Auswerteschaltung verbunden ist.

Das Aufnehmerelement 1 stellt einen physikalisch-elektrischen Wandler dar, der beispielsweise aus einem Dehnungsmeßstreifen besteht, der auf einem Verformungskörper appliziert ist. Derartige Aufnehmerelemente 1 werden als Kraft- oder Druckaufnehmer verwendet, wobei eine Biegespannung am Verformungskörper in eine elektrische Widerstandsänderung umgewandelt wird, aus der in einer Auswertevorrichtung ein Kraft- oder Druckmeßwert ermittelt, angezeigt oder weiterverarbeitet wird. Dazu kann das Aufnehmerelement 1 in einer Dreileitertechnik 11, 12, 13 mit der Auswertevorrichtung verbunden werden, die mittels einer Meßbrückenschaltung das elektrische Meßsignal auswertet.

Eine derartige Auswerteschaltung, die mit einem Dehnungsmeßstreifenaufnehmerelement über drei Leitungen verbunden wird, ist aus der DE 199 57 088 A1 bekannt. Dabei liegen im Meßbetrieb zwei Leitungen 11, 12 am Aufnehmerelement 1 auf gleichem elektrischen Potential. So stellen die beiden unmittelbar am Aufnehmerelement 1 angeordneten Leitungen 12, 13 die Meß- und Speiseleitungen dar, während die beiden am Aufnehmerelement miteinander verbundenen Leitungen 11, 12 gleichen Potentials eine Meß- und Speiseleitung 12 und eine Fühlerleitung 11 darstellen. Dabei wird über die Speiseleitung 12 das Aufnehmerelement 1 im Meßbetrieb mit Energie versorgt. Die Fühlerleitung 11 dient zur Erfassung der Versorgungsspannung an der Speise- und Meßleitung 12 mit dessen Hilfe von der Auswertevorrichtung die Spannungsabfälle in Folge der Leitungswiderstände ausgeregelt und damit kompensiert werden. Im Meßzustand bzw. im Meßmodus wird das Leitungspaar 11, 12 aus Fühlerleitung 11 und Meß- und Speiseleitung 12 zur Übertragung der Meßsignale und zur Ausregelung der Speisespannungsabfälle auf den Meßleitungen verwendet.

Sollen nun zur Auswertung der Meßsignale Aufnehmerkennwerte oder Kalibrierdaten zur Auswertevorrichtung übertragen werden, so wird vom Meßmodus in einen Kommunikationsmodus umgeschaltet. Dazu wird von Seiten der Auswertevorrichtung der Speicherschaltung 3 über das Leitungspaar 11, 12 aus Fühlerleitung 11 und Meß- und Speiseleitung 12 eine Spannung eingeprägt. Da bei der herkömmlichen Dreileiterschaltung die Fühlerleitung 11 und die Speiseleitung 12 vor dem Aufnehmerelement unmittelbar miteinander verbunden sind, würde auf diesen beiden Leitungen ein großer Strom fließen, der lediglich durch die Leitungswiderstände begrenzt würde. Daher wird in das Leitungspaar 11, 12 aus Fühlerleitung 11 und Speiseleitung 12 vor dem Verbindungspunkt 6 am Aufnehmerelement 1 eine elektronische Strombegrenzungsschaltung 2 vorgesehen, die durch eine Fold-Back-Kennlinie den Strom auf einen kleinen Reststrom begrenzt. Damit steht hier die eingeprägte Spannung zur Versorgung der Speicherschaltung 3 zur Verfügung, wodurch diese in den Kommunikationsmodus umschaltet.

Für die Übertragung der Daten von der Speicherschaltung 3 zur Auswertevorrichtung wird das Leitungspaar 11, 12 aus Fühlerleitung 11 und Speiseleitung 12 benutzt. Über dieses Leitungspaar 11, 12 wird sowohl die Energie zur Speisung der Speicherschaltung 3 als auch die Information von der Speicherschaltung 3 übertragen. Dazu wird als Speicherschaltung 3 eine integrierte Schaltung des Herstellers Dallas verwendet, die nach einem Dallas-1-wire-Protokoll arbeitet, so daß keine zusätzlichen Leitungen im Kommunikationsmodus benötigt werden. Allerdings können zur Übertragung der Daten zwischen der Auswertevorrichtung und der Speicherschaltung 3 auch weitere für den Meßbetrieb vorgesehene Speise- und Meßleitungen 13 verwendet werden, indem diese durch elektronische Schalteinrichtungen im Aufnehmer 4 von diesem abgetrennt und an die Speicherschaltung 3 angeschaltet werden. Auch bei dieser Ausführung werden für den Kommunikationsmodus keine zusätzlichen Leitungen zwischen dem Meßgrößenaufnehmer 4 und der Auswertevorrichtung benötigt.

Nach dem Auslesen der Kennwert- und/oder Kalibrierdaten wird von Seiten der Auswerteschaltung wieder in den Meßmodus zurückgeschaltet, in dem die eingeprägte Spannung wieder vom Leitungspaar 11, 12 der Fühler- 11 und Speiseleitung 12 abgeschaltet wird. Bei der Verwendung einer programmierbaren Speicherschaltung 3 die beispielsweise als EPROM ausgebildet ist, kann im Kommunikationsmodus der Speicherinhalt nicht nur ausgelesen, sondern durch die Auswertevorrichtung auch mit neuen Kenn- und/oder Kalibrierwerten beschrieben werden.

Ist die Strombegrenzungsschaltung 2 wieder in den Meßmodus zurückgeschaltet, so erfolgt die Meßwertermittlung wie bei einer Meßschaltung ohne angeschlossenen Datenspeichermodul 5. Dabei werden im Meßmodus keinerlei besondere Anforderungen an die Signale in den Leitungen 11, 12 gestellt. Es ist lediglich sicherzustellen, daß in das verwendete Fühler-Speiseleitungspaar 11, 12 von Seiten der Auswerteelektronik keine Spannung eingeprägt wird. Dies ist immer dann sichergestellt, wenn eine der beiden Leitungen 11, 12 im Meßmodus als Eingangssignal verschaltet ist. Insbesondere ist dieser Aufnehmer 4 mit angeschlossenem Datenspeichermodul 5 auch für eine Trägerfrequenzspeisung und Strom- und Spannungs-Speisungen mit unterschiedlichen Amplituden geeignet. Durch die Charakteristik der Strombegrenzungsschaltung 2 ist sichergestellt, daß der Meßbetrieb nicht beeinträchtigt wird. Dabei stellt eine gewisse elektrische Impedanz dieser Schaltung 2 im Meßbetrieb kein Problem dar, da diese Schaltung 2 in der Fühlerleitung 11 vorgesehen ist und hier im Meßbetrieb nur vernachlässigbare Stromstärken auftreten.

Der vorbeschriebene Meßgrößenaufnehmer 4 mit dem angeschlossenen Datenspeichermodul 5 besteht aus einem Aufnehmerelement 1 mit einem Dehnungsmeßstreifen, der als Viertelbrücke geschaltet und über zwei Meß- und Speiseleitungen 12, 13 und eine Fühlerleitung 11 mit der Auswertevorrichtung verbunden ist. Dabei sind die restlichen Ergänzungswiderstände der Vollbrücke in der Auswertevorrichtung angeordnet und zu einer Vollbrücke mit dem Aufnehmerelement 1 verschaltet. Bei derartigen Aufnehmerelementen 1 sind auch Vierleiterschaltungen bekannt, bei der neben den Meß- und Speiseleitungen 12, 13 zwei Fühlerleitungen 11 vorgesehen sind, wobei jede den Spannungsabfall auf einer der Meß- und Speiseleitungen 12, 13 ausregelt. Auch für eine derartige Vierleiterschaltung ist der Einsatz des vorbeschriebenen Datenspeichermoduls 5 wie vorstehend beschrieben möglich.

Bei Dehnungsmeßstreifenaufnehmern sind aber auch Fünf- und Sechsleiterschaltungen bekannt, bei der das Aufnehmerelement 1 aus mehreren Dehnungsmeßstreifen (DMS) besteht, das dann als Halb- oder Vollbrücke geschaltet ist. Auch bei diesen Mehrleiterschaltungen sind neben den Speiseleitungen 12, 13 Fühlerleitungen 11 vorgesehen, so daß dabei immer ein Fühler-Speiseleitunaspaar 11, 12 zur Anschaltung des Datenspeichermoduls 5 verwendet werden kann. Derartige Datenspeichermodule 5 sind aber auch bei induktiven Halbbrückenschaltungen einsetzbar, wie sie bei Meßgrößenaufnehmern vorgesehen sind, die als Wegaufnehmer eingesetzt werden. Weiterhin kann der Meßgrößenaufnehmer 4 auch als Temperaturfühler ausgebildet sein, bei dem die physikalisch-elektrischen Wandlerelemente aus temperaturempfindlichen Widerständen bestehen, die als Wheatstonesche Brücke geschaltet sind. Auch diese Schaltungen erfordern zur Kompensation des Spannungsabfalls auf den Verbindungsleitungen zwischen dem Fühlerelement 1 und der Auswertevorrichtung über Fühlerleitungen 11 die in Verbindung mit einer Speiseleitung zur Anschaltung des Datenspeichermoduls 5 nutzbar sind.

Derartige Temperaturfühler können aber auch mit einem Thermoelement ausgebildet sein, wobei zwischen der Auswertevorrichtung und dem Thermoelement lediglich ein Leitungspaar benötigt wird. Da bei einem Thermoelement aber nur eine sehr geringe Spannung erzeugt wird, kann am Aufnehmerelement 1 von einem gleichen elektrischen Potential ausgegangen werden, das zur Anschaltung eines Datenspeichermoduls 5 geeignet ist. Der Einsatz der vorbeschriebenen Datenspeichermodulschaltung 5 ist somit für eine Vielzahl von Aufnehmerelementen 1 möglich, so daß damit ein Großteil der heute eingesetzten analogen Meßgrößenaufnehmer ausgerüstet werden kann, die einen räumlichen Abstand zu ihrer Auswertevorrichtung aufweisen und mit auslesbarem Kennwert- und/oder Kalibrierdatenspeichern aus- oder nachgerüstet werden sollen. Insbesondere bei einer digitalen Weiterverarbeitung der Meßsignale in der Auswertevorrichtung ist die selbsttätige Auslesung und/oder Programmierung derartiger Kenn- und/oder Kalibrierwerte von Vorteil.

In Fig. 2 der Zeichnung ist eine spezielle Ausgestaltung des Datenspeichermoduls 5 in Form eines vereinfachten Schaltbildes dargestellt. Dabei ist ein Meßgrößenaufnehmer vorgesehen, der in Sechsleitertechnik 1, 2, 2', 3, 3', 4 mit einer nicht dargestellten Auswertevorrichtung verbunden ist. Hierbei handelt es sich um ein Aufnehmerelement 1, das mindestens aus vier Dehnungsmeßstreifen (DMS) besteht, die als Vollbrücke verschaltet sind, wie beispielsweise bei einer hochwertigen Wägezelle oder einem Kraftaufnehmer. Dieser Meßgrößenaufnehmer 4 verfügt über zwei Speiseleitungen 2, 3, zwei Fühlerleitungen 2', 3' und zwei Meßleitungen 1, 4 die mit der Auswertevorrichtung verbunden sind. In dem einen Fühler-Speiseleitungspaar 2, 2' ist die Schaltung des Datenspeichermoduls 5 vorgesehen, wobei dieses Leitungspaar 2, 2' im Meßmodus für die Ausregelung der Brückenspeiseschaltung des Vollbrückenaufnehmers 1 verwendet wird. Die Strombegrenzungsschaltung 2 dieses Datenspeichermoduls 5 besteht im wesentlichen aus dem IC1 als Spannungswandler, einem Feld-Effekt-Transistor T1, einem Widerstand R1, einer Diode D und einem Kondensator C1, die in das Fühler-Speisespannungspaar 2', 2 geschaltet sind. Der Widerstand R1 von ca. 100 Ohm sowie der Feld-Effekt-Transistor T1 stören den Meßbetrieb nicht, da die Leitung 2' als Fühlerleitung verwendet wird und daher nur vernachlässigbar kleine Ströme fließen.

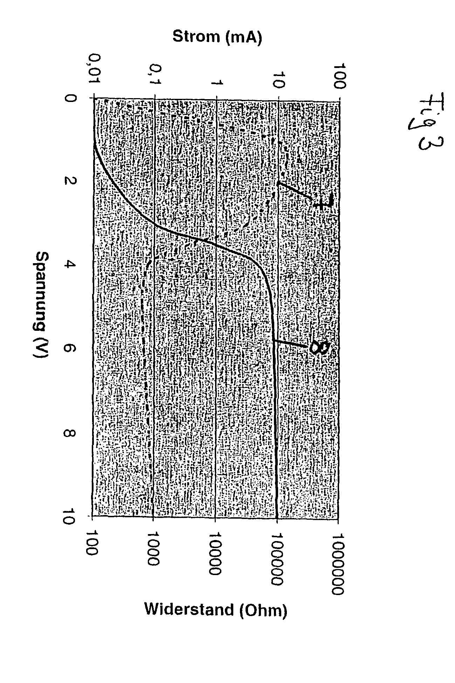

Im Kommunikationsmodus wird nun in das Leitungspaar 2, 2' von Seiten der Auswertevorrichtung eine Spannung von 5 Volt eingeprägt. Der Spannungswandler IC1 erzeugt daraus eine negative Spannung von -5 V, die den Feld-Effekt-Transistor T1 hochohmig schaltet und damit den Strom entsprechend einer Fold-Back-Kennlinie begrenzt. In Fig. 3 der Zeichnung ist beispielhaft eine solche Fold-Back-Kennlinie 7 in einem Koordinatensystem dargestellt. Dabei ist der Strom in Abhängigkeit der Spannung als punktierte Kennlinie 7 und der Widerstand in Abhängigkeit der Spannung als durchgezogene Kennlinie 8 in das Koordinatensystem eingezeichnet. Daraus ist erkennbar, daß bei einer Aufschaltung der Spannung von Seiten der Auswertevorrichtung der Strom zunächst bis über 10 mA ansteigt und bei einer Umschaltspannung von ca. 4 V auf einem relativ konstanten Wert von 0,1 mA abfällt. Dieser geringe Reststrom beeinträchtigt die Speisung und das Auslesen des Datenspeichers IC2 nicht. Die Diode D und der Kondensator C1 sind dafür vorgesehen, daß bei einer kurzzeitig reduzierten Spannung im Leitungspaar 2, 2' wie sie beim Datenaustausch mit der Speicherschaltung 3 auftritt, die Strombegrenzung durch den hochohmigen Feld-Effekt-Transistor T1 aufrecht erhalten bleibt.

Die Speicherschaltung 3 besteht im wesentlichen aus einem integrierten Halbleiterbaustein IC2 der beispielsweise von Hersteller Dallas Semiconductor lieferbar ist und einen Datenaustausch nach dem Dallas-1-wire-Protokoll ermöglicht. Der Halbleiterspeicher IC2 benötigt für die Energieversorgung sowie den Datenaustausch deshalb lediglich ein Leitungspaar und ist somit ebenfalls in das Fühler-Speiseleitungspaar 2, 2' geschaltet. Diese Schaltung arbeitet im Kommunikationsmodus so, wie bereits zu Fig. 1 der Zeichnung ausführlich beschrieben.

## Patentansprüche

1. Meßgrößenaufnehmer mit angeschlossenem Datenspeicher, der über mindestens zwei Verbindungsleitungen (2',2; 11,12), die im Meßbetrieb gleiches elektrisches Potential aufweisen, mit einer Auswertevorrichtung verbunden ist, wobei durch die Auswertevorrichtung vorgegebene Daten aus dem Datenspeicher (3) auslesbar und/oder einschreibbar sind, **dadurch gekennzeichnet, daß** der Datenspeicher (3) als Datenspeichermodul (5) ausgebildet ist, das an ein Leitungspaar (2', 2; 11, 12) mit im Meßmodus gleichem oder annähernd gleichem elektrischen Potential geschaltet und durch eine elektronische Strombegrenzungsschaltung (2) im Datenspeichermodul (5) vom Meßmodus in einen Kommunikationsmodus zur Datenübertragung umschaltbar ist.

2. Meßgrößenaufnehmer nach Anspruch 1, **dadurch gekennzeichnet, daß** das Datenspeichermodul (5) eine Strombegrenzungsschaltung (2) und ein Datenspeicher (3) zum Auslesen und/oder Eingeben von vorgebbaren Kennwert- und/oder Kalibrierdaten enthält.

3. Meßgrößenaufnehmer nach Anspruch 1 oder 2, **dadurch gekennzeichnet, daß** zur physikalisch-elektrischen Wandlung mindestens ein Aufnehmerelement (1) vorgesehen ist, das mit dem Datenspeichermodul (5) eine Baueinheit bildet oder in dessen örtlicher Nähe angeordnet ist.

4. Meßgrößenaufnehmer nach einem der vorhergehenden Ansprüche, **dadurch gekennzeichnet, daß** das Aufnehmerelement (1) mit Dehnungsmeßstreifen (DMS) oder anderen veränderlichen Widerständen zur physikalisch-elektrischen Wandlung vorgesehen ist, die als Wheatstonesche Brücke geschaltet und mit drei, vier, fünf oder sechs Leitungen (1, 2, 2', 3, 3', 4; 11, 12, 13) mit der Auswertevorrichtung verbunden sind.

5. Meßgrößenaufnehmer nach einem der Ansprüche 1 bis 3, **dadurch gekennzeichnet, daß** das Aufnehmerelement (1) als Thermoelement oder als induktiver Aufnehmer ausgebildet ist, das über mindestens zwei Leitungen mit der Auswertevorrichtung verbunden ist.

6. Meßgrößenaufnehmer nach einem der vorhergehenden Ansprüche, **dadurch gekennzeichnet, daß** die Strombegrenzungsschaltung (2) so ausgebildet ist, daß durch eine eingeprägte Spannung auf dem Leitungspaar (2', 2; 11, 12) mit gleichem elektrischen Potential von Seiten der Auswertevorrichtung in eine Reststrombegrenzung nach einer Fold-Back-Kennlinie (7) umgeschaltet wird, die einen Kommunikationsmodus darstellt.

7. Meßgrößenaufnehmer nach einem der vorhergehenden Ansprüche, **dadurch gekennzeichnet, daß** im Kommunikationsmodus die im Datenspeicher (3) gespeicherten Daten von Seiten der Auswertevorrichtung auslesbar und/oder neue Daten eingebbar sind.

8. Meßgrößenaufnehmer nach einem der vorhergehenden Ansprüche, **dadurch gekennzeichnet, daß** die Strombegrenzungsschaltung (2) mindestens einen Spannungswandler (IC1), einen Feld-Effekt-Transistor (T1), einen Widerstand (R1), eine Diode (D) und einen Kondensator (C1) enthält, die in eine Fühlerleitung (2', 11) oder spannungsfreie Meßleitung geschaltet sind.

9. Meßgrößenaufnehmer nach einem der vorhergehenden Ansprüche, **dadurch gekennzeichnet, daß** der Datenspeicher (3) aus einem integrierten Schaltkreis (IC2) besteht, der so ausgebildet ist, daß die Datenübertragung nach dem Dallas-1-wire-Protokoll erfolgt.

10. Meßgrößenaufnehmer nach einem der vorhergehenden Ansprüche, **dadurch gekennzeichnet, daß** die Leitungen (2, 2', 11, 12) zur Umschaltung in den Kommunikationsmodus und zum Datenaustausch während des Meßbetriebs gleichzeitig zur Speisung des Aufnehmerelements (1) und/oder zur Meßwerterfassung vorgesehen sind.

11. Meßgrößenaufnehmer nach einem der vorhergehenden Ansprüche, **dadurch gekennzeichnet, daß** der Aufnehmer mit Datenspeicher (3) in Drei-, Vier-, Fünf- und Sechsleitertechnik über die gleiche Verbindungsleitungszahl (1, 2, 2', 3, 3', 4; 11, 12, 13) verfügt wie ein herkömmlicher Aufnehmer ohne Datenspeicher.

12. Verfahren zur Erfassung von Meßwerten und zum Austausch von Daten mit einem Meßgrößenaufnehmer nach einem der Ansprüche 1 bis 10, **dadurch gekennzeichnet, daß** zur Umschaltung von einem Meßmodus in einen Kommunikationsmodus auf einem Verbindungsleitungspaar (2, 2'; 11, 12) mit gleichem elektrischen Potential zwischen einem Aufnehmer (4) und einer Auswertevorrichtung eine Spannung eingeprägt wird, durch die der Strom auf einen geringen Reststrom (7) begrenzt wird und der während des Datenaustauschs aufrecht erhalten bleibt, wobei das Verbindungsleitungspaar (2, 2'; 11, 12) im Meßmodus zur Speisung und/oder Meßwertübertragung dient.

13. Verfahren nach Anspruch 12, **dadurch gekennzeichnet, daß** zur Umschaltung in den Kommunikationsmodus und zur Datenübertragung ein Leitungspaar (2, 2'; 11, 12) verwendet wird, das auch zur Meßwertermittlung und/oder - speisung in herkömmlichen Zwei-, Drei-, Vier-, Fünf- oder Sechsleitertechnik-Schaltungen zur Verbindung des Aufnehmers (4) und der Auswerteschaltung notwendig ist.

14. Verfahren nach einem der Ansprüche 12 oder 13, **dadurch gekennzeichnet, daß** der Meßgrößenaufnehmer (4) mit einer Gleichspannung, Gleichstrom, Trägerfrequenzspannung oder Trägerfrequenzstrom gespeist wird.

15. Verfahren nach einem der Ansprüche 12 bis 14, **dadurch gekennzeichnet, daß** mehrere Meßgrößenaufnehmer (4) mit Datenspeichermodul (5) parallelgeschaltet und die Daten der einzelnen Datenspeichermodule (5) von einer gemeinsamen Auswertevorrichtung ausgelesen werden.

## Claims

1. Measurement pick-up with connected data memory, which is connected to an evaluation device by means of at least two connection leads (2', 2; 11, 12), which have the same electrical potential in the measurement operation, wherein data predefined by the evaluation device can be read from the data memory (3) and/or input, **characterised in that** the data memory (3) is configured as a data memory module (5), which is connected to a pair of leads (2', 2; 11, 12) with the same or approximately the same electrical potential in the measurement mode and can be switched over by an electronic current limiter circuit (2) in the data memory module (5) from the measurement mode into a communication mode for data transfer.

2. Measurement pick-up according to claim 1, **characterised in that** the data memory module (5) includes a current limiter circuit (2) and a data memory (3) for the readout and/or input of predefinable characteristic and/or calibration data.

3. Measurement pick-up according to claim 1 or 2, **characterised in that** there is provided for the physical-electrical conversion at least one pick-up element (1), which forms a structural unit with the data memory module (5) or is arranged in the local vicinity thereof.

4. Measurement pick-up according to one of the preceding claims, **characterised in that** the pick-up element (1) is provided with strain gauges (DMS) or other variable resistances for the physical-electrical conversion, which are connected in the form of a Wheatstone bridge and are connected with three, four, five or six leads (1, 2, 2', 3, 3', 4; 11, 12, 13) to the evaluation device.

5. Measurement pick-up according to one of claims 1 to 3, **characterised in that** the pick-up element (1) is configured as a thermocouple or as an inductive pick-up, which is connected to the evaluation device by means of at least two leads.

6. Measurement pick-up according to one of the preceding claims, **characterised in that** the current limiter circuit (2) is configured such that switchover into a cutoff current limitation according to a fold-back characteristic (7), which represents a communication mode, occurs by means of the evaluation device by an impressed voltage on the pair of leads (2', 2; 11, 12) with the same electrical potential.

7. Measurement pick-up according to one of the preceding claims, **characterised in that** in the communication mode the data stored in the data memory (3) can be read and/or new data can be input by means of the evaluation device.

8. Measurement pick-up according to one of the preceding claims, **characterised in that** the current limiter circuit (2) includes at least one voltage transformer (IC1), a field-effect transistor (T1), a resistance (R1), a diode (D) and a capacitor (C1), which are connected into a sensor lead (2', 11) or voltage-free measuring lead.

9. Measurement pick-up according to one of the preceding claims, **characterised in that** the data memory (3) consists of an integrated circuit (IC2), which is configured such that the data transfer occurs according to the Dallas-1-wire protocol.

10. Measurement pick-up according to one of the preceding claims, **characterised in that** the leads (2, 2', 11, 12) for switchover into the communication mode and for data exchange during the measurement operation are at the same time provided for power supply to the pick-up element (1) and/or for measured value acquisition.

11. Measurement pick-up according to one of the preceding claims, **characterised in that** the measurement pick-up with data memory (3) of three, four, five, and six lead type has the same number of connection leads (1, 2, 2', 3, 3', 4; 11, 12, 13) as a conventional pick-up without a data memory.

12. Method for acquiring measured values and exchanging data with a measurement pick-up according to one of claims 1 to 10, **characterised in that** to switchover from a measurement mode into a communication mode a voltage is impressed on a pair of connection leads (2, 2'; 11, 12) with the same electrical potential between a pick-up (4) and an evaluation device, by means of which the current is limited to a low cutoff current (7) and which is maintained during the data exchange, wherein in the measurement mode the pair of connection leads (2, 2'; 11, 12) serves to supply power and/or transfer measured values.

13. Method according to claim 12, **characterised in that** for switchover into the communication mode and for data transfer, a pair of leads (2, 2'; 11, 12) is used, which is also necessary for measured value acquisition and/or supply in conventional two-, three-, four-, five- or six-conductor circuits for connection of the measurement pick-up (4) and the evaluation circuit.

14. Method according to one of claims 12 or 13, **characterised in that** the measurement pick-up (4) is supplied with a d.c. voltage, direct current, carrier frequency voltage or carrier frequency current.

15. Method according to one of claims 12 to 14, **characterised in that** a plurality of measurement pick-ups (4) are connected in parallel to data memory module (5) and the data of the individual data memory modules (5) are read out by a common evaluation device.

## Revendications

1. Enregistreur de grandeurs mesurées avec une mémoire de données branchée qui est reliée à un dispositif d'évaluation par l'intermédiaire d'au moins deux lignes de connexion (2, 2' ; 11, 12) qui ont le même potentiel électrique en mode de mesure, dans lequel les données prédéterminées par le dispositif d'évaluation peuvent être extraites et/ou écrites hors de la mémoire de données (3), **caractérisé en ce que** la mémoire de données (3) est conçue comme un module de mémoire de données (5) qui est raccordé à une paire de lignes (2, 2' ; 11, 12) avec le même ou pratiquement le même potentiel électrique en mode de mesure et qui peut être commuté entre le mode de mesure et un mode de communication pour le transfert de données par un circuit électronique limiteur de courant (2) dans le module de mémoire de données (5).

2. Enregistreur de grandeurs mesurées selon la revendication 1, **caractérisé en ce que** le module de mémoire de données (5) contient un circuit électronique limiteur de courant (2) et une mémoire de données (3) pour l'extraction et/ou la saisie de données d'identification et/ou d'étalonnage prédéterminables.

3. Enregistreur de grandeurs mesurées selon la revendication 1 ou 2, **caractérisé en ce que**, pour la conversion physique-électrique, il est prévu au moins un élément enregistreur (1) qui forme une unité modulaire avec le module de mémoire de données (5) ou qui est disposé à proximité de celui-ci.

4. Enregistreur de grandeurs mesurées selon l'une quelconque des revendications précédentes, **caractérisé en ce que** l'élément enregistreur (1) est prévu avec des extensomètres à fil d'acier (DMS) ou d'autres résistances variables pour la conversion physique-électrique qui sont montés comme un pont de Wheatstone et qui sont connectés au dispositif d'évaluation par trois, quatre, cinq ou six lignes (1, 2, 2', 3, 3', 4 ; 11, 12, 13).

5. Enregistreur de grandeurs mesurées selon l'une quelconque des revendications 1 à 3, **caractérisé en ce que** l'élément enregistreur (1) est conçu comme thermocouple ou comme enregistreur inductif qui est connecté au dispositif d'évaluation par au moins deux lignes.

6. Enregistreur de grandeurs mesurées selon l'une quelconque des revendications précédentes, **caractérisé en ce que** le circuit électronique limiteur de courant (2) est conçu de telle manière qu'une commutation en limitation de courant résiduel suivant une courbe caractéristique Fold-Back (7), qui représente un mode de communication, est réalisée par une tension appliquée à la paire de lignes (2, 2' ; 11, 12) avec le même potentiel électrique du côté du dispositif d'évaluation.

7. Enregistreur de grandeurs mesurées selon l'une quelconque des revendications précédentes, **caractérisé en ce que**, en mode de communication, les données stockées dans la mémoire de données (3) peuvent être extraites et/ou de nouvelles données peuvent être saisies du côté du dispositif d'évaluation.

8. Enregistreur de grandeurs mesurées selon l'une quelconque des revendications précédentes, **caractérisé en ce que** le circuit électronique limiteur de courant (2) comprend au moins un convertisseur de tension (IC1), un transistor à effet de champ (T1), une résistance (R1), une diode (D) et un condensateur (C1) qui sont montés dans une ligne de détection (2', 11) ou dans une ligne de mesure hors tension.

9. Enregistreur de grandeurs mesurées selon l'une quelconque des revendications précédentes, **caractérisé en ce que** la mémoire de données (3) est constituée par un circuit de commutation intégré (IC2) qui est conçu de telle manière que le transfert de données se fait suivant le protocole Dallas-1-wire.

10. Enregistreur de grandeurs mesurées selon l'une quelconque des revendications précédentes, **caractérisé en ce que** les lignes (2, 2', 11, 12) pour la commutation en mode de communication et pour l'échange de données pendant le mode de mesure sont prévues, en même temps, pour l'alimentation de l'élément enregistreur (1) et/ou pour la détection des valeurs mesurées.

11. Enregistreur de grandeurs mesurées selon l'une quelconque des revendications précédentes, **caractérisé en ce que** l'enregistreur avec mémoire de données (3) suivant la technique à trois, quatre, cinq et six conducteurs est équipé du même nombre de lignes de connexion (1, 2, 2', 3, 3', 4 ; 11, 12, 13) qu'un enregistreur courant sans mémoire de données.

12. Procédé pour le détection de données mesurées et pour l'échange de données avec un enregistreur de grandeurs mesurées selon l'une quelconque des revendications 1 à 10, **caractérisé en ce que**, pour la commutation entre un mode de mesure et un mode de communication, une tension est appliquée à une paire de lignes de connexion (2, 2' ; 11, 12) avec le même potentiel électrique entre un enregistreur (4) et un dispositif d'évaluation, grâce à laquelle le courant est limité à un faible courant résiduel (7) et qui est maintenu pendant l'échange de données, la paire de lignes de connexion (2, 2' ; 11, 12) servant à l'alimentation et/ou au transfert de données mesurées en mode de mesure.

13. Procédé selon la revendication 12, **caractérisé en ce que**, pour la commutation en mode de communication et pour le transfert de données, on utilise une paire de lignes de connexion (2, 2' ; 11, 12) qui est également nécessaire pour la détection et/ou pour l'alimentation des valeurs mesurées dans des circuits conventionnels suivant la technique à deux, trois, quatre, cinq ou six conducteurs pour la connexion de l'enregistreur (4) et du circuit d'évaluation.

14. Procédé selon l'une quelconque des revendications 12 ou 13, **caractérisé en ce que** l'enregistreur de données mesurées (4) est alimenté avec une tension continue, un courant continu, une tension à fréquence porteuse ou un courant à fréquence porteuse.

15. Procédé selon l'une quelconque des revendications 12 à 14, **caractérisé en ce que** plusieurs enregistreurs de données mesurées (4) avec module de mémoire de données (5) sont montés en parallèle et les données des différents modules de mémoire de données (5) sont extraites par un dispositif d'évaluation commun.
